# EUROPEAN PATENT SPECIFICATION

(11) **EP 3 495 940 B1**
(45) Date of publication and mention of the grant of the patent: **01.01.2025**
(21) Application number: 17206015.4
(22) Date of filing: 07.12.2017
(51) Int. Cl.: G06F 3/14, G09F 9/302, G09G 3/32, G09G 3/34, G09G 5/02

(54) **DISPLAY DEVICE AND METHOD OF OPERATING A DISPLAY DEVICE**
ANZEIGEVORRICHTUNG UND VERFAHREN ZUM BETRIEB EINER ANZEIGEVORRICHTUNG
AFFICHEUR ET SON PROCÉDÉ DE FONCTIONNEMENT

(43) Date of publication of application: 12.06.2019
(73) Proprietor: Vestel Elektronik Sanayi ve Ticaret A.S., 45030 Manisa (TR)
(72) Inventor: YILDIZ,, Kadir, 45030 Manisa (TR); DERELÍ,, Ulas, 45030 Manisa (TR)
(74) Representative: Page White Farrer

(56) References cited:
- CN-U- 204 884 471
- US-A1- 2011 235 332
- US-A1- 2014 259 824
- US-A1- 2015 254 046
- US-A1- 2017 103 735

## Description

### Technical Field

The present disclosure relates to a display system and a method of operating a display device.

### Background

Display devices generate heat during operation. Excessive heat can damage components of the display device, including for example light sources of the display device and electronic devices of the display device, such as a mainboard and individual components on the mainboard.

US2015254046A1 discloses a method including providing access to a multi-panel display including a plurality of display panels. Each panel of the plurality of display panels is mounted onto a mechanical support structure. The method further includes identifying a defective panel from the plurality of display panels. Without powering down the multi-panel display, electrical connection to the defective panel is disconnected and the defective panel is removed from the mechanical support structure.

US2017103735A1 discloses a display device including a body, a roller rotatable installed in the body, a flexible display configured to be wound or unwound from the roller in response to a rotation of the rolled, and a controller configured to change a screen size for displaying information related to a prescribed content in response to the winding or the unwinding of the flexible display.

CN204884471U discloses a rotatory LED display device including rotating electrical machines and an LED display panel.

Each of US2011/23332 and US2014/259824 discloses a display device comprising a panel comprising a plurality of light sources for generating an image, and a mechanism comprising actuators for individually moving the light sources in response to receiving a control command from a processor.

### Summary

The invention is set out by the appended claims.

### Brief Description of the Drawings

To assist understanding of the present disclosure and to show how embodiments may be put into effect, reference is made by way of example to the accompanying drawings in which:
Figure 1 shows schematically a display device in accordance with examples described herein;
Figure 2 shows schematically a display device having improved airflow; and
Figure 3 shows schematically an example system comprising a display device and a controller.

### Detailed Description

As mentioned and is well known, display devices generate heat during operation. Excessive heat can damage or affect the performance of components of the display device, including for example light sources of the display device and electronic devices of the display device, such as a mainboard and individual components on the mainboard.

Various arrangements for cooling a display device are known. These typically include providing fans or air conditioning-type units to blow (cold) air across the whole display device or the light sources. Such use of fans or air conditioning-type units inevitably means that more power is consumed in powering the fans or air conditioning-type units. This is undesirable of itself and also can contribute to heating of the display device (because for example the fans or air conditioning-type units are inevitably close to the display device and so heat generated by the associated electric motors or air conditioning-type units, etc. in use can heat the display device directly or at least heat the environment in which the display device is located, resulting in heating of the display device).

Excessive heat is a particular problem with large display devices and display devices that are used outside, as in the case of for example so-called "signage" which may be used for displaying information, advertising, videos, etc. This is because the outside temperature can fluctuate over a wide range (particularly compared with indoor temperatures say) and also because of sunlight which may be directly incident on the display device.

In examples described herein, parts of a display device which are currently inactive (e.g. not displaying part of an image) are physically moved in order to separate them from the rest of the display device. This may comprise moving individual light sources which are (currently) inactive. A gap is thus created between the moved light source(s) and the rest of the display device, improving airflow around the active light sources of the display device. The improved airflow aids in cooling the active light sources.

In some examples, the display comprises a plurality of display modules, each display module comprising a plurality of light sources. In such examples, the modules correspond to movable parts of the display, and moving an inactive part comprises moving one or more of the display modules.

The display device may be a display device as used in or with many different types of consumer apparatus, including for example television screens or monitors, computer displays or monitors, and displays for other computing devices, etc. The display device may be a display device as used in public environments in so-called "signage", for example, for displaying adverts or for information or entertainment that is of interest to a larger audience, including for outdoor use as well as indoor use.

The light sources may be for example light sources that are used in a backlit display screen. In a backlit display device, the lit backlight has plural light sources for emitting light. The light sources may be for example LEDs (light emitting diodes). In a "direct-lit" backlight, the light sources are arranged typically in a regular array on a reflector panel. The light sources emit light which is directed through a diffuser to a display panel. The diffuser helps to reduce glare that can otherwise occur. The display panel is formed of or includes a number of display elements (which are also often referred to as "pixels" as they typically correspond to pixels in the image that is displayed). The display elements are controllable so as to selectively transmit or prevent light from the light sources passing through the display panel. The display elements may be for example LCDs (liquid crystal display devices). In a display device having a direct-lit backlight, generally there is a light source for each display element.

In another example, the light sources may be for example light sources that are used in an edge-lit backlight. That is, there is at least one light source which is arranged at or towards an edge of the display device. Commonly, there are light sources arranged around each of the four edges of a display device that has an edge-lit backlight. The light sources are typically elongate and may be for example coldcathode fluorescent lamps. In other examples, the light sources located at the edges are plural LEDs or other individual light sources arranged along the edges of the display device. The light sources may emit light into a light guide which is mounted in front of a reflector. The light guide directs the light through a diffuser into a display panel. Similarly to the direct-lit backlight example described above, the display panel may have plural individually controllable display elements. The display elements may be for example LCDs.

In other examples, the light sources may effectively generate the pixels directly, i.e. the light from the light source corresponds to the light required for that pixel and no backlight is required. (The light sources may for example generate coloured light or may generate white light which is then passed through controllable coloured filters so as to achieve different colours in the image.) Display devices that generate the pixels directly include for example display devices that use OLEDs (organic light emitting diodes) and plasma technology. As another example, the light source may be an (inorganic) light-emitting diode (LED) and may be used as part of an LED display device, including for example an LED display or "wall" or a micro LED display. An area of particular application for the present disclosure is "signage", which often use display "walls" with a number of LEDs and which are often used in outside environments or other environments where the ambient temperature may not be well controlled.

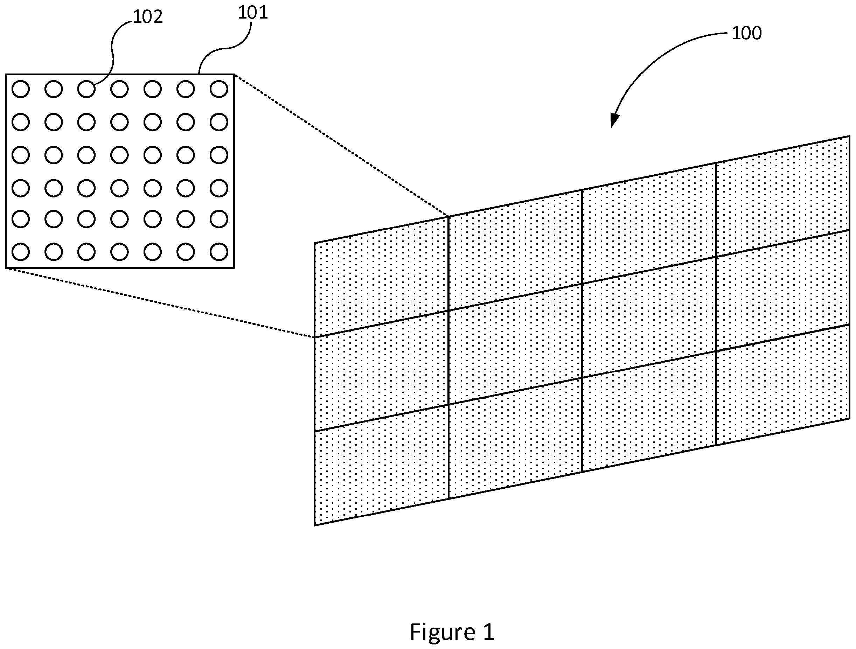

Figure 1 shows schematically a display device 100 in accordance with examples described herein. The display device 100 comprises a plurality of display modules 101. Each display module 101 comprises a plurality of light sources 102, such as for example LEDs. The modules 101 form a display with which static or moving images can be rendered by controlling the light sources 102 accordingly, as is known in the art. In the example of Figure 1, the display device 100 comprises twelve display modules 101 arranged in a 3x4 grid and each module 101 comprises forty-two light sources 102. It is understood that this is a specific example for the purposes of explanation only. In general display modules 101 of the display device 100 will typically comprise many more light sources than shown schematically in Figure 1.

As mentioned above, the modules 101 of the display device 100, or one or more individual components of the modules 101, may be liable to overheating during operation. When displaying an image (e.g. a static or video image) on the display device 100, one or more parts of the display 100 may be "inactive". Here, "inactive" refers to the case when the light sources 102 concerned are currently switched off or displaying a background part of an image.

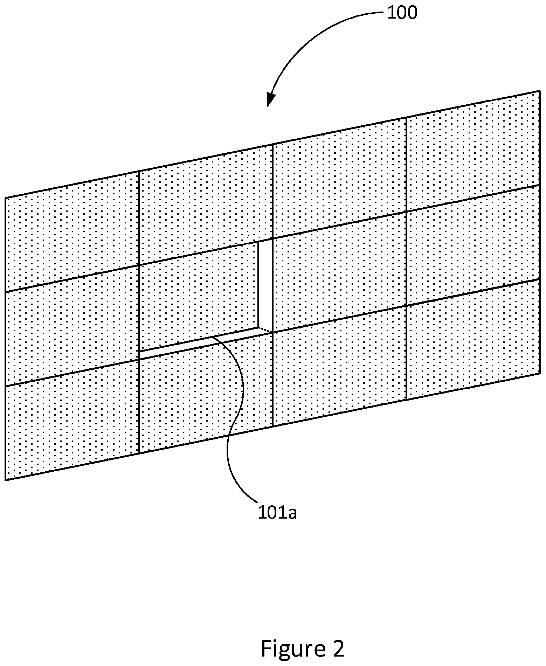

Figure 2 illustrates an example in which a particular module 101a is inactive and has thus been moved into the plane of the display (i.e. inwards, normal to the plane of the display). This movement creates an opening between the inactive module 101a and the other modules through which air can flow (here, in a direction from the front to back or vice versa of the display device 100). The moving air acts to remove heat from the modules 101, including particularly the active modules 101, thus cooling them down.

The inactive module 101a is off (or displaying only background), meaning that it is not displaying any part (or at least any important part) of an image. Hence, there will be substantially no distortion to the image from a viewer's perspective. The inactive module 101a need only move a small amount in order to create the opening. In many situations, for example when the display device 100 is used as signage in an environment in which the viewers may not even be particularly close to the display device 100, this is unlikely even to be noticed by viewers.

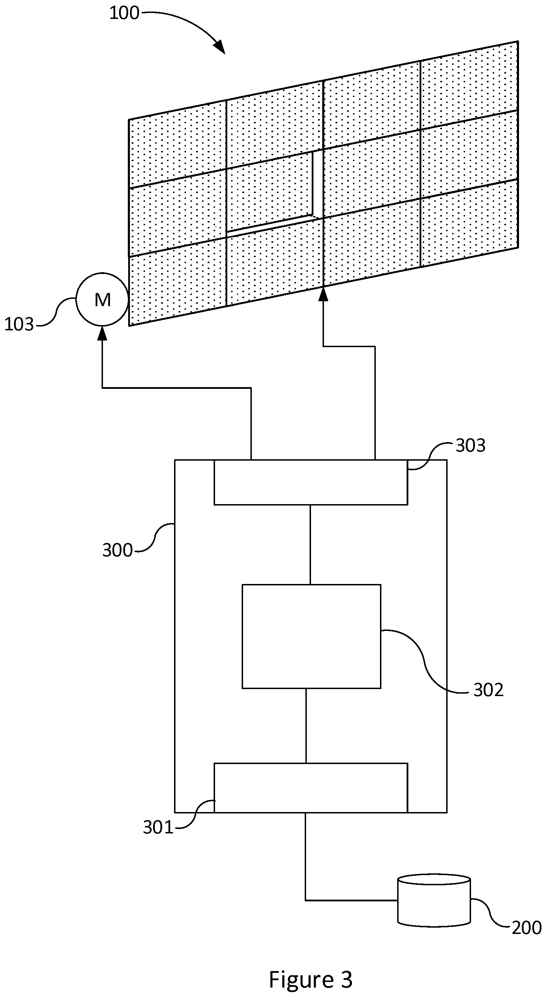

Figure 3 illustrates an example system incorporating the display device 100 described above. The display device 100 in this example is provided with a mechanism 103 for selectively and controllably moving the panels 101 as described above.

The system comprises a controller 300 for controlling the display device 100 and the moving mechanism 103 of the display device 100. The controller 300 comprises an input 301, a processor 302 and an output 303. The processor 302 is operatively coupled to each of the input 301 and the output 303.

The input 301 comprises a data interface for receiving image data (which may be static or video image data) from a data storage 200. For example, the input 301 may comprise hardware for connecting to the data storage 200 via a wired connection such as an Ethernet network connection or an HDMI connection, etc., or a wireless connection, such as a WiFi connection. Other interfaces are well known in the art. In some examples, the data storage 200 may be a DVD or Blu Ray storage device to be read by a DVD or Blu Ray player which then provides the image data to the processor 302. It is understood that data storage 200 shown in Figure 3 may represent any suitable computer storage of image data to be displayed on the display device 100. This data storage 200 may be local to the controller 300 itself, or may be accessed via one or more networks, including the Internet.

The output 303 comprises hardware for transmitting data to the display device 100 to be displayed. In this example, the hardware of the output 303 is also configured to transmit control commands to the mechanism 103. However, the controller 300 may in other examples comprise two separate outputs, one for controlling the display 100 and one for controlling the mechanism 103.

The processor 302 is configured to receive image data from the data storage 200 via the input 301, and transmit it to the display device 100 via the output 303 such that the image (static or video) is displayed on the display device 100. This may comprise the processor 302 performing one or more intermediate steps such as decoding, decompressing, unencrypting, etc., as well known in the art.

The processor 302 is additionally configured to determine one or more inactive parts of the display device 100. This comprises the processor 302 identifying light sources 102 or display modules 101 that are controlled to be off, or ones that are displaying a background region of the image. In the latter case, the processor 302 analyses the image data to determine background regions of the image.

In any case, the processor 302 is configured to determine one or more parts of the display device 100 which will be inactive when the image is rendered from the image data. The processor 302 is configured to, in response to determining an inactive part, send a control command to the mechanism 103 to cause the mechanism 103 to physically move at least one corresponding part(s) in order to separate that part (or those parts) from the rest of the display device 100. As mentioned above, this may be performed on a single light source level in some examples. Alternatively, this may be performed on a display module level in other examples. That is, the light sources 102 may be arranged in fixed panels (the display modules 101 in this example) and the mechanism 103 may be constructed and arranged to move one or more panels of light sources 102 at a time.

The mechanism 103 comprises actuators for individually moving one or more light sources 102 (or display modules 101) of the display device 100. The actuators may be arranged to move (translate) the light sources 102 perpendicular to the display plane of the display device 100, as shown in Figure 2. Alternatively or additionally, the mechanism 103 may comprise actuators for moving and/or rotating the light sources 102 in other directions. For example, the mechanism 103 may, in response to a control signal from the processor 302, rotate an inactive display module 101 slightly, around for example a vertical or horizontal axis, in order to create a gap between that display module 101 and surrounding display modules 101.

The display device 100 may, in addition to the mechanism 103, comprise a sensor (not shown in the Figures) for determining whether or not it is currently raining. For example, a humidity sensor may be provided for detecting moisture around the display device 100. Data from such a sensor may be provided to the processor 302. In such cases, the processor 302 may be able to make a determination as to whether it is currently raining or not, based on the received data from the sensor. The processor 302 may then be configured to perform the step of controlling the mechanism 103 to move any inactive panels of the display device 100 only when it is not raining. Only moving the panels or module 101 (or individual light sources 102) when it is not raining has the advantage or preventing rainwater entering a gap created by the movement. The processor 302 may perform the step of determining whether or not it is raining first, and may then not perform the step of determining inactive part(s) when it is raining.

Moreover, there may be a time delay or threshold, operated by for example the display device 100 or in particular the processor 302, so that a light source 102 or a panel or module 101 is only moved once it has been inactive for a certain period of time. This is to avoid the light source 102 or module 101 being moved prematurely or too frequently simply because a light source 102 or all light sources 102 of the module 101 are briefly inactive. This may occur for example because the light sources 102 are off briefly because a black background is being displayed, or there is a brief pause between display of images. The threshold may be of the order of a few seconds to a minute or a few minutes say.

The controller 300 and its components as shown in Figure 3 are represented as a schematic block diagram for the purposes of explaining the functionality of the controller 300 only. Hence, it is understood that each component of the controller 300 is a functional block for performing the functionality ascribed to it herein. Each component may be implemented in hardware, software, firmware, or a combination thereof. Additionally, although described as separate components of the controller 300, some or all of the functionality may be performed by a single piece of hardware, software, or firmware.

It will be understood that the processor or processing system or circuitry referred to herein may in practice be provided by a single chip or integrated circuit or plural chips or integrated circuits, optionally provided as a chipset, an applicationspecific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solidstate drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, modifications not described herein may also be employed within the scope of the invention, which is defined in the claims.

## Claims

1. A method of operating a display device (100) using a controller (300); the controller (300) comprising an input (301) configured to receive image data to be displayed from a data storage (200), a processor (302) configured to send a control command, and an output (303) for transmitting the control command and the image data to the display device; the display device (100) having a panel comprising a plurality of light sources (102) for generating an image corresponding to the image data, and a mechanism (103) comprising actuators for individually moving the light sources (102), the mechanism (103) being constructed and arranged to physically move inactive light sources (102) in response to receiving the control command from the processor (302) to separate the inactive light sources (102) from active light sources (102), such that a gap is created between the inactive light sources (102) and the active light sources (102) through which air can flow; the method comprising:
the processor (302) of the controller (300) identifying the inactive light sources by:
identifying light sources (102) that are controlled to be off, wherein the inactive light sources are the light sources that are controlled to be off; or by
analysing the image data to determine background regions of the image, wherein the inactive light sources are the light sources (102) corresponding to the determined background regions of the image; and
in response to identifying the inactive light sources (102), the processor (302) sending a control command to cause the mechanism (103) of the display device (100) to separate the identified inactive light sources.

2. A method according to claim 1, wherein said moving said inactive light sources (102) comprises translating said inactive light sources (102).

3. A method according to claim 1 or claim 2, wherein said moving said inactive light sources (102) comprises rotating said inactive light sources (102).

4. A method according to any of claims 1 to 3, comprising the processor (302) receiving input from a sensor indicative of whether or not it is raining, and wherein the moving said inactive light sources (102) is performed on condition that the sensor indicates that it is not raining.

5. A method according to any of claims 1 to 4, wherein the plurality of light sources (102) are arranged in respective display modules (101), and wherein:
the processor (302) is determining a display module to be inactive when the light sources (102) of the display module (101a) are inactive; and
said moving said inactive light sources (102) comprises moving said inactive display module (101a) to separate said inactive display module (101a) from active display modules (101).

6. A system comprising a controller (300) and a display device (100), the controller (300) comprising:
an input (301) configured to receive image data to be displayed from a data storage (200),
a processor (302) configured to send a control command, and
an output (303) for transmitting the control command and the image data to the display device (100), the display device (100) comprising a panel comprising a plurality of light sources (102) for generating an image corresponding to the image data, and a mechanism (103) comprising actuators for individually moving the light sources (102), the mechanism (103) being constructed and arranged to physically move inactive light sources (102) in response to receiving the control command from the processor (302) to separate the inactive light sources (102) from active light sources (102), such that a gap is created between the inactive light sources (102) and the active light sources (102) through which air can flow;
wherein the processor (302) is configured to identify the inactive light sources by:
identifying light sources (102) that are controlled to be off, wherein the inactive light sources are the light sources that are controlled to be off; or by
analysing the image data to determine background regions of the image,
wherein the inactive light sources are the light sources (102) corresponding to the determined background regions of the image; and
wherein the processor (302) is further configured to send the control command to cause the identified inactive light sources to be separated.

7. A system according to claim 6, wherein the mechanism (103) is constructed and arranged to move said inactive light sources (102) by translating said inactive light sources (102).

8. A system according to claim 6 or claim 7, wherein the mechanism (103) is constructed and arranged to move said inactive light sources (102) by rotating said inactive light sources (102).

9. A system according to any of claims 6 to 8, the display device (100) comprising a sensor for generating an output indicative of whether or not it is raining, the display device (100) being arranged such that the mechanism (103) is only operated to move said inactive light sources (102) when the output of the sensor indicates that it is not raining.

10. A system according to any of claim 6 to 9, wherein the plurality of light sources (102) are arranged in respective display modules (101), and wherein the mechanism (103) is constructed and arranged to move said inactive light sources (102) by moving inactive ones of said display modules (101a) to separate the inactive display modules (101a) from others of said display modules (101), wherein the inactive display modules are display modules having only inactive light sources.

## Patentansprüche

1. Verfahren zum Bedienen einer Anzeigevorrichtung (100) unter Verwendung einer Steuerung (300); wobei die Steuerung (300) einen Eingang (301) umfasst, der konfiguriert ist, um von einem Datenspeicher (200) Bilddaten zu empfangen, die angezeigt werden sollen, einen Prozessor (302), der konfiguriert ist, um einen Steuerbefehl zu senden, und einen Ausgang (303) zum Übertragen des Steuerbefehls und der Bilddaten an die Anzeigevorrichtung; wobei die Anzeigevorrichtung (100) eine Tafel mit einer Vielzahl von Lichtquellen (102) zum Erzeugen eines den Bilddaten entsprechenden Bildes umfasst, und einem Mechanismus (103) mit Aktuatoren zum individuellen Bewegen der Lichtquellen (102), wobei der Mechanismus (103) aufgebaut und angeordnet ist, um inaktive Lichtquellen (102) als Reaktion auf den Empfang des Steuerbefehls vom Prozessor (302) zur Trennung der inaktiven Lichtquellen (102) von aktiven Lichtquellen (102) physikalisch zu bewegen, so dass zwischen den inaktiven Lichtquellen (102) und den aktiven Lichtquellen (102) ein Spalt entsteht, durch den Luft strömen kann; wobei das Verfahren umfasst:
der Prozessor (302) der Steuerung (300) identifiziert inaktive Lichtquellen durch:
Identifizieren von Lichtquellen (102), die so gesteuert sind, dass sie auszuschalten sind, wobei die inaktiven Lichtquellen diejenigen Lichtquellen sind, die so gesteuert sind, dass sie auszuschalten sind; oder durch
Analysieren der Bilddaten zur Bestimmung von Hintergrundbereichen des Bildes, wobei die inaktiven Lichtquellen diejenigen Lichtquellen (102) sind, die den bestimmten Hintergrundbereichen des Bildes entsprechen; und
wobei der Prozessor (302) den Steuerbefehl im Ansprechen auf das Identifizieren der inaktiven Lichtquellen (102) sendet, um den Mechanismus (103) der Anzeigevorrichtung (100) zum Trennen der identifizierten inaktiven Lichtquellen zu veranlassen.

2. Verfahren nach Anspruch 1, wobei das Bewegen der inaktiven Lichtquellen (102) ein Verschieben der inaktiven Lichtquellen (102) umfasst.

3. Verfahren nach Anspruch 1 oder Anspruch 2, wobei das Bewegen der inaktiven Lichtquellen (102) ein Drehen der inaktiven Lichtquellen (102) umfasst.

4. Verfahren nach einem der Ansprüche 1 bis 3, wobei der Prozessor (302) eine Eingabe von einem Sensor empfängt, die anzeigt, ob es regnet oder nicht, und wobei das Bewegen der inaktiven Lichtquellen (102) unter der Bedingung ausgeführt wird, dass der Sensor anzeigt, dass es nicht regnet.

5. Verfahren nach einem der Ansprüche 1 bis 4, wobei die Vielzahl von Lichtquellen (102) in jeweiligen Anzeigemodulen (101) angeordnet ist, und wobei
der Prozessor (302) bestimmt, dass ein Anzeigemodul inaktiv ist, wenn die Lichtquellen (102) des Anzeigemoduls (101a) inaktiv sind; und
wobei das Bewegen der inaktiven Lichtquellen (102) ein Bewegen des inaktiven Anzeigemoduls (101a) umfasst, um das inaktive Anzeigemodul (101a) von den aktiven Anzeigemodulen (101) zu trennen.

6. System mit einer Steuerung (300) und einer Anzeigevorrichtung (100), wobei die Steuerung (300) umfasst:
einen Eingang (301), der konfiguriert ist, um anzuzeigende Bilddaten von einem Datenspeicher (200) zu empfangen,
einen Prozessor (302), der konfiguriert ist, um einen Steuerbefehl zu senden, und
einen Ausgang (303) zum Übertragen des Steuerbefehls und der Bilddaten an die Anzeigevorrichtung (100), wobei die Anzeigevorrichtung (100) eine Tafel mit einer Vielzahl von Lichtquellen (102) zum Erzeugen eines den Bilddaten entsprechenden Bildes umfasst, und einen Mechanismus (103) mit Aktuatoren zum individuellen Bewegen der Lichtquellen (102), wobei der Mechanismus (103) aufgebaut und angeordnet ist, um inaktive Lichtquellen (102) im Ansprechen auf ein Empfangen des Steuerbefehls von dem Prozessor (302) zum Trennen der inaktiven Lichtquellen (102) von den aktiven Lichtquellen (102) physikalisch zu bewegen, so dass ein Spalt zwischen den inaktiven Lichtquellen (102) und den aktiven Lichtquellen (102) entsteht, durch den Luft strömen kann;
wobei der Prozessor (302) so konfiguriert ist, dass er die inaktiven Lichtquellen identifiziert durch:
Identifizieren von zum Ausschalten gesteuerten Lichtquellen (102), wobei die inaktiven Lichtquellen diejenigen Lichtquellen sind, die so gesteuert sind, dass sie auszuschaltet sind; oder durch
Analysieren der Bilddaten zur Bestimmung von Hintergrundbereichen des Bildes, wobei die inaktiven Lichtquellen diejenigen Lichtquellen (102) sind, die den bestimmten Hintergrundbereichen des Bildes entsprechen; und
wobei der Prozessor (302) ferner konfiguriert ist, um den Steuerbefehl zu senden, um ein Trennen der identifizierten inaktiven Lichtquellen zu veranlassen.

7. System nach Anspruch 6, wobei der Mechanismus (103) aufgebaut und angeordnet ist, um die inaktiven Lichtquellen (102) durch Verschieben der inaktiven Lichtquellen (102) zu bewegen.

8. System nach Anspruch 6 oder Anspruch 7, wobei der Mechanismus (103) aufgebaut und angeordnet ist, um die inaktiven Lichtquellen (102) durch Drehen der inaktiven Lichtquellen (102) zu bewegen.

9. System nach einem der Ansprüche 6 bis 8, wobei die Anzeigevorrichtung (100) einen Sensor zum Erzeugen einer Ausgabe umfasst, die anzeigt, ob es regnet oder nicht, wobei die Anzeigevorrichtung (100) so ausgestaltet ist, dass der Mechanismus (103) nur dann zum Bewegen der inaktiven Lichtquellen (102) betrieben wird, wenn die Ausgabe des Sensors anzeigt, dass es nicht regnet.

10. System nach einem der Ansprüche 6 bis 9, wobei die Vielzahl von Lichtquellen (102) in jeweiligen Anzeigemodulen (101) angeordnet sind, und wobei der Mechanismus (103) aufgebaut und angeordnet ist, um die inaktiven Lichtquellen (102) durch Bewegen inaktiver Anzeigemodule (101a) zu bewegen, um die inaktiven Anzeigemodule (101a) von anderen Anzeigemodulen (101) zu trennen, wobei die inaktiven Anzeigemodule solche Anzeigemodule sind, die nur inaktive Lichtquellen aufweisen.

## Revendications

1. Procédé de fonctionnement d'un dispositif d'affichage (100) à l'aide d'un contrôleur (300), le contrôleur (300) comprenant une entrée (301) qui est configurée pour recevoir des données d'image à afficher provenant d'un stockage de données (200), un processeur (302) qui est configuré pour envoyer une commande de contrôle, et une sortie (303) servant à transmettre la commande de contrôle et les données d'image vers le dispositif d'affichage, le dispositif d'affichage (100) disposant d'un panneau comprenant de multiples sources de lumière (102) servant à générer une image correspondant aux données d'image, et d'un mécanisme (103) comprenant des actionneurs servant à déplacer de manière individuelle les sources de lumière (102), le mécanisme (103) étant construit et agencé de manière à déplacer physiquement des sources de lumière inactives (102) en réponse à la réception de la commande de contrôle provenant du processeur (302) afin de séparer les sources de lumière inactives (102) des sources de lumière actives (102), de sorte à créer un espacement entre les sources de lumière inactives (102) et les sources de lumière actives (102) à travers lequel l'air peut circuler, le procédé comprenant :
le processeur (302) du contrôleur (300) identifiant les sources de lumière inactives en :
identifiant des sources de lumière (102) qui sont contrôlées comme étant éteintes, dans lequel les sources de lumière inactives sont les sources de lumière qui sont contrôlées comme étant éteintes ; ou
analysant les données d'image pour déterminer des régions d'arrière-plan de l'image, dans lequel les sources de lumière inactives sont les sources de lumière (102) qui correspondent aux régions d'arrière-plan de l'image déterminées, et
en réponse à l'identification des sources de lumière inactives (102), le processeur (302) envoyant la commande de contrôle pour permettre au mécanisme (103) du dispositif d'affichage (100) de séparer les sources de lumière inactives identifiées.

2. Procédé selon la revendication 1, dans lequel ledit déplacement desdites sources de lumière inactives (102) consiste en une translation desdites sources de lumière inactives (102).

3. Procédé selon la revendication 1 ou 2, dans lequel ledit déplacement desdites sources de lumière inactives (102) consiste en une rotation desdites sources de lumière inactives (102).

4. Procédé selon l'une quelconque des revendications 1 à 3, comprenant le processeur (302) recevant une entrée provenant d'un capteur et indiquant s'il est en train de pleuvoir ou non, et dans lequel le déplacement desdites sources de lumière inactives (102) est effectué à condition que le capteur indique qu'il n'est pas en train de pleuvoir.

5. Procédé selon l'une quelconque des revendications 1 à 4, dans lequel de multiples sources de lumière (102) sont disposées dans des modules d'affichage respectifs (101), et dans lequel :
le processeur (302) est en train de déterminer qu'un module d'affichage est inactif lorsque les sources de lumière (102) du module d'affichage (101a) sont inactives ; et
ledit déplacement desdites sources de lumière inactives (102) consiste à déplacer ledit module d'affichage inactif (101a) afin de séparer ledit module d'affichage inactif (101a) des modules d'affichage actifs (101).

6. Système comprenant un contrôleur (300) et un dispositif d'affichage (100), le contrôleur (300) comprenant :
une entrée (301) qui est configurée pour recevoir des données d'image à afficher provenant d'un stockage de données (200) ;
un processeur (302) qui est configuré pour envoyer une commande de contrôle ; et
une sortie (303) qui sert à transmettre la commande de contrôle et les données d'image vers le dispositif d'affichage (100), le dispositif d'affichage (100) disposant d'un panneau comprenant de multiples sources de lumière (102) servant à générer une image correspondant aux données d'image, et d'un mécanisme (103) comprenant des actionneurs servant à déplacer de manière individuelle les sources de lumière (102), le mécanisme (103) étant construit et agencé de manière à déplacer physiquement des sources de lumière inactives (102) en réponse à la réception de la commande de contrôle provenant du processeur (302) afin de séparer les sources de lumière inactives (102) des sources de lumière actives (102), de sorte à créer un espacement entre les sources de lumière inactives (102) et les sources de lumière actives (102) à travers lequel l'air peut circuler,
dans lequel le processeur (302) est configuré pour identifier les sources de lumière inactives en :
identifiant des sources de lumière (102) qui sont contrôlées comme étant éteintes, dans lequel les sources de lumière inactives sont les sources de lumière qui sont contrôlées comme étant éteintes ; ou
analysant les données d'image pour déterminer des régions d'arrière-plan de l'image, dans lequel les sources de lumière inactives sont les sources de lumière (102) qui correspondent aux régions d'arrière-plan de l'image déterminées, et
dans lequel le processeur (302) est en outre configuré pour envoyer la commande de contrôle pour permettre aux sources de lumière inactives identifiées d'être séparées.

7. Système selon la revendication 6, dans lequel le mécanisme (103) est construit et agencé de manière à déplacer lesdites sources de lumière inactives (102) par translation desdites sources de lumière inactives (102).

8. Système selon la revendication 6 ou 7, dans lequel le mécanisme (103) est construit et agencé de manière à déplacer lesdites sources de lumière inactives (102) en faisant tourner lesdites sources de lumière inactives (102).

9. Système selon l'une quelconque des revendications 6 à 8, dans lequel le dispositif d'affichage (100) comprend un capteur servant à générer une sortie indiquant s'il est en train de pleuvoir ou non, le dispositif d'affichage (100) étant agencé de sorte que le mécanisme (103) n'est mis en fonctionnement que pour déplacer lesdites sources de lumière inactives (102) lorsque la sortie du capteur indique qu'il n'est pas en train de pleuvoir.

10. Système selon l'une quelconque des revendications 6 à 9, dans lequel les multiples sources de lumière (102) sont disposées dans des modules d'affichage respectifs (101), et dans lequel le mécanisme (103) est construit et agencé de manière à déplacer lesdites sources de lumière inactives (102) en déplaçant ceux inactifs desdits modules d'affichage (101a) afin de séparer les modules d'affichage inactifs (101a) des autres desdits modules d'affichage (101), dans lequel les modules d'affichage inactifs sont des modules d'affichage qui ne disposent que de sources de lumière inactives.
